# FASCICULE DE BREVET EUROPEEN

(11) **EP 0 479 694 B1**
(45) Date de publication et mention de la délivrance du brevet: **29.05.1996**
(21) Numéro de dépôt: 91440068.4
(22) Date de dépôt: 22.08.1991
(51) Int. Cl.: H02B 1/18, H02B 1/21

(54) **Dispositif de distribution de courant pour tableau de distribution d'énergie électrique**
Stromverteilungsvorrichtung für die elektrische Energie einer Verteilertafel
Current distribution device for electrical energy distribution board

(30) Priorité: 02.10.1990 FR 9012270
(43) Date de publication de la demande: 08.04.1992
(73) Titulaire: SOCOMEC S.A., F-67230 Benfeld (FR)
(72) Inventeur: Zinck, Robert, F-67230 Benfeld (FR); Frantzen, Jean-Pierre, F-67230 Sand (FR)
(74) Mandataire: Dénoyez, Hubert

(56) Documents cités:
- FR-A- 1 290 325
- US-A- 2 842 640

## Description

La présente invention a pour objet le produit industriel nouveau que constitue un dispositif de distribution de courant incorporable à un tableau de distribution d'énergie électrique et susceptible de couper et/ou de sectionner omnipolairement et automatiquement son alimentation, afin d'isoler électriquement le circuit aval dudit dispositif du circuit amont.

Les dispositifs de distribution actuellement connus, avec les pôles disposés en ligne, appelés couramment réglettes de distribution, permettent de couper ou sectionner le circuit électrique qui les traverse par enlèvement unipolaire ou omnipolaire des fusibles, ou par interrupteur-sectionneur incorporé : ainsi le dispositif décrit dans US-A-2 842 640.

La présente invention a pour but d'offrir une solution de coupure brusque associée à la distribution de courant, grâce à la possibilité qu'elle offre de pouvoir commander automatiquement sa coupure omnipolaire par tout moyen pouvant émettre un signal électrique.

Conformément à l'invention, le dispositif de distribution de courant qui en fait l'objet présente des pales disposés en ligne et il comporte des moyens de coupure qui associent à un électro-aimant une plaque polaire et un ressort, que ledit électro-aimant permet de maintenir dans une certaine position et de relâcher brusquement sous l'effet d'un signal électrique.

Un tel dispositif peut permettre le déplacement d'un élément mobile qui détermine la coupure brusque et le sectionnement du circuit électrique le traversant.

Selon un premier mode de réalisation du dispositif de distribution du courant selon l'invention, le dispositif de coupure est distinct du dispositif de distribution lui-même, auquel il peut être fixé par tout moyen approprié tel que des pattes de fixation se solidarisant avec d'autres pattes de fixation disposées sur la partie distribution, étant par ailleurs solidarisé aux barres de distribution du tableau.

Conformément à l'invention, le dispositif de coupure comprend en ce cas, dans un boîtier en matière isolante équipé de contacts fixes permettant d'une part le raccordement de la partie distribution et d'autre part le raccordement aux barres de distribution du tableau :
- un barreau mobile en matière isolante muni de contacts électriques aptes à assurer la transmission et la coupure du courant entre les contacts fixes amont et aval,
- un levier fixé à une extrémité du barreau mobile et monté mobile en rotation autour d'un axe solidaire du boîtier à l'une de ses extrémités, de manière qu'un déplacement en translation du barreau provoque une rotation du levier et inversement une rotation du levier provoque un déplacement en translation du barreau,
- un ressort solidarisé par l'une de ses extrémités au boîtier et par l'autre extrémité au barreau mobile, de manière à pouvoir provoquer le déplacement dudit barreau mobile,
- un électro-aimant associé à une plaque polaire fixée à l'extrémité du barreau mobile et magnétiquement solidaire du corps de l'électro-aimant, lui-même solidaire du boîtier.

Conformément à l'invention, sous l'effet d'un déplacement en rotation du levier, le barreau mobile équipé des contacts mobiles et de la plaque polaire se déplace en translation en comprimant le ressort. En fin de course du barreau mobile, la plaque polaire vient en contact avec le corps de l'électro-aimant et est maintenue par celui-ci magnétiquement, en retenant l'effort accumulé par le ressort. Ce déplacement permet aux contacts mobiles d'établir le passage du courant entre les contacts fixes amont et aval.

Par actionnement du levier en sens inverse, ou par émission ou interruption d'un courant électrique transmis à l'électro-aimant, la plaque polaire se sépare du corps de ce dernier et l'énergie accumulée dans le ressort, en se libérant, provoque le déplacement en sens inverse du barreau mobile, permettant de couper les circuits électriques précédemment établis.

Selon un second mode de réalisation du dispositif selon l'invention, le dispositif de coupure est incorporé au dispositif de distribution, le barreau mobile étant disposé sous l'ensemble formé par les fusibles et les plages de raccordement qui les prolongent.

Dans ce cas, les contacts mobiles montés dans le barreau mobile viennent établir ou couper les circuits électriques entre les contacts fixes amont de raccordement aux barres de distribution du tableau et les couteaux fusibles ou leurs prolongements amonts de manière que les fusibles soient hors tension lorsque le circuit est ouvert, l'ensemble constitué par le dispositif de coupure et la partie traditionnelle de distribution et protection par fusible étant disposé dans un boîtier unique réalisé en matière isolante, les autres éléments du dispositif pouvant être identiques à ceux du dispositif précédent.

Le dispositif selon l'invention peut être avantageusement mis en oeuvre pour permettre le délestage automatique d'un réseau de distribution en cas de surcharge, auquel cas il peut être relié à des moyens de mesure de l'intensité du courant électrique intégrant un seuil prédéterminé dont le dépassement provoque l'émission d'un signal électrique apte à déclencher la coupure du ou des circuits électriques constituant ledit réseau, lesdits moyens de mesure pouvant être intégrés ou non au boîtier renfermant le dispositif selon l'invention.

La présente invention sera mieux comprise à la lecture de la description détaillée qui suit, faite au regard du dessin annexé qui en représente deux modes de réalisation différents, étant bien entendu que cette description ne présente aucan caractère limitatif vis-à-vis de l'invention.

Dans le dessin annexé :
- la figure 1 représente une vue en perspective, avec arraché partiel, d'un premier mode de réalisation du dispositif selon l'invention, dans lequel le dispositif de coupure est distinct du dispositif de distribution.
- la figure 2 représente une vue en perspective, avec arraché partiel, d'un second mode de réalisation du dispositif selon l'invention, dans lequel le dispositif de coupure est incorporé au dispositif de distribution.

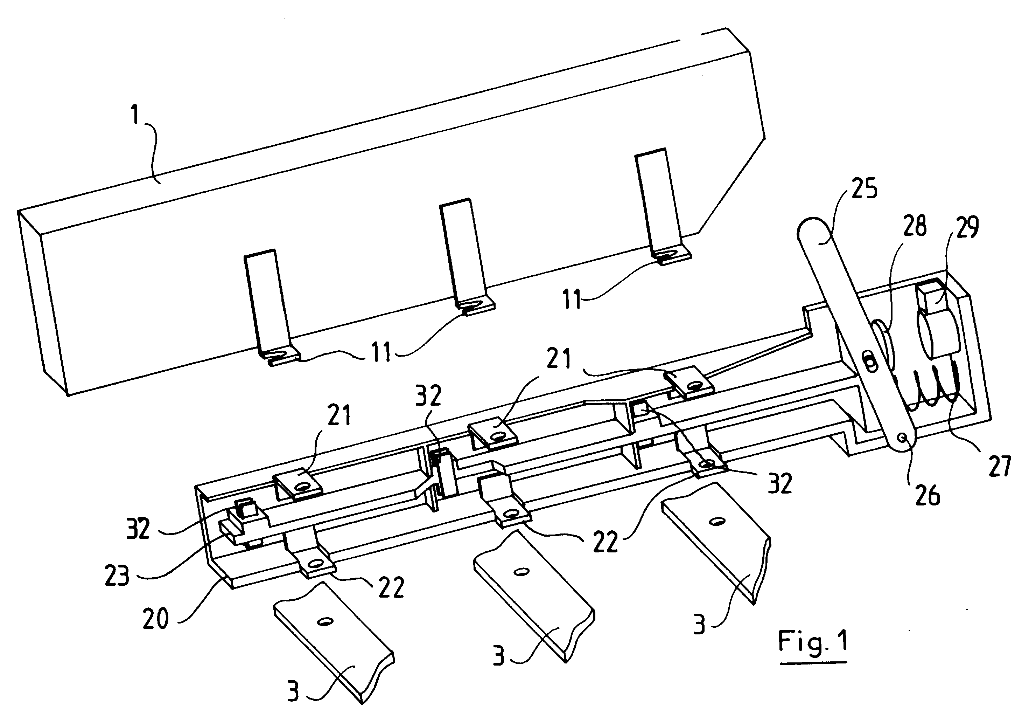

Si on se réfère d'abord à la figure 1, on voit que le dispositif de distribution de courant 1 peut être assemblé avec un dispositif de coupure 2 susceptible d'être solidarisé aux barres de distribution 3 du tableau.

A cet effet, la réglette 1 est munie de contacts fixes 11 aptes à être assemblés avec des contacts fixes aval 21 disposés sur la face supérieure du dispositif de coupure 2, qui comporte d'autre part, sur sa face inférieure, des contacts fixes amont 22 permettant son assemblage avec les barres de distribution 3.

Le dispositif de coupure 2, représenté en position ouverte, comprend un boîtier 20 en matériau isolant renfermant un barreau mobile 23 également en matériau isolant, fixé à un levier 25 monté libre en rotation autour d'un point de fixation 26 solidaire du boîtier 20, le barreau mobile 23 étant solidarisé d'une part à un ressort 27, lui-même solidaire du boîtier 20, d'autre part à une plaque polaire 28 associée à un électro-aimant 29, lui-même solidaire par son corps du boîtier 20 et connecté à une source de courant quelconque non représentée sur la figure.

Le barreau mobile 23 est traversé par des contacts mobiles 32 susceptibles de venir se positionner sur les contacts fixes 21 et 22, de manière à assurer le passage du courant électrique des barres de distribution 3 vers le dispositif de distribution 1.

L'électro-aimant 29 est préréglé de manière que la plaque polaire 28 se désolidarise sous l'effet d'un signal électrique, auquel cas le barreau 23 se déplace sous la poussée du ressort 27 jusqu'à la position représentée sur la figure et coupe omnipolairement le circuit électrique.

Une action sur le levier 25, entraînant un déplacement inverse du barreau 23 qui comprime alors le ressort 27, de telle manière que la plaque polaire 28 vienne se solidariser magnétiquement au corps de l'électro-aimant 29, permet aux contacts mobiles 32 de refermer omnipolairement le même circuit électrique sur les contacts fixes 21 et 22.

Une action sur le levier 25 dans le sens inverse de celui précédemment décrit, provoque les mêmes effets qu'un signal électrique émis vers l'électro-aimant 29.

Un tel dispositif présente l'avantage de pouvoir être facilement adapté aux réglettes de distribution standard.

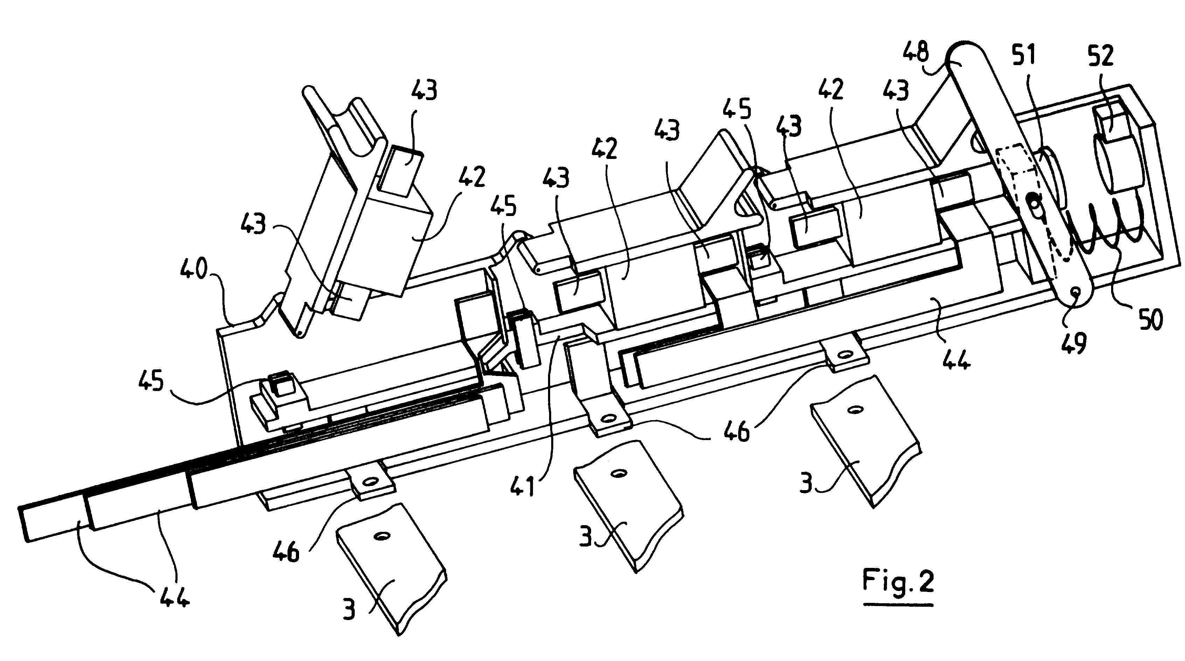

Si on se réfère maintenant à la figure 2, on voit que le dispositif de distribution et de coupure de courant 4 qui y est représenté comprend, dans un boîtier 40, un barreau mobile 41 disposé en-dessous des fusibles 42, ces derniers en contact avec des plages de raccordement 44.

Le barreau 41 est équipé de contacts mobiles 45 permettant de relier électriquement les couteaux 43 des fusibles 42 ou leurs prolongements aux barres de distribution 3 par l'intermédiaire de contacts fixes 46.

Le barreau 41 sur lequel est monté un levier 48 mobile en rotation autour d'un axe 49 solidaire du boîtier 40 à son extrémité est solidarisé d'une part à un ressort 50 lui-même solidaire du boîtier 40 et d'autre part à la plaque polaire 51 d'une ventouse électromagnétique 52 montée en parallèle du ressort 50 et reliée électriquement à une source de courant quelconque.

Le déplacement en translation, sous l'action de la ventouse électromagnétique 52, du barreau mobile 41, du ressort 50 et du levier 48, s'effectue de la même manière que pour le dispositif de la figure 1, permettant une coupure ou fermeture omnipolaire entre les couteaux 43 des fusibles 42, ou leurs prolongements, et les barres de distribution 3.

Bien entendu le dispositif selon l'invention peut être commandé à tout moment manuellement, par actionnement direct du levier.

## Revendications

1. Dispositif de distribution de courant pour tableau de distribution d'énergie électrique comportant des pôles (21) disposés en ligne, susceptible de couper omnipolairement de façon automatique les circuits électriques le traversant, caractérisé en ce qu'il comporte des moyens permettant de commander automatiquement sa coupure omnipolaire sous l'effet d'un signal électrique, lesdits moyens comprenant d'une part un barreau mobile (23, 41) muni de contacts mobiles (32, 45) permettant de relier le dispositif de distribution (1, 4) aux barres de distribution (3), ledit barreau mobile (23, 41) étant solidarisé à des moyens de coupure (2) comprenant un ressort hélicoïdal (27, 51) fixé d'une part au boîtier (20) et d'autre part à l'extrémité du barreau mobile (23, 41), une plaque polaire (28) solidaire de la même extrémité dudit barreau mobile (23, 41), associée à un électro-aimant (29, 52), et un levier (25, 48) solidarisé à l'une des extrémités dudit barreau mobile (23, 41).

2. Dispositif selon la revendication 1, caractérisé en ce que les moyens de coupure (2) sont distincts du dispositif de distribution (1).

3. Dispositif selon l'une des revendications 1 à 2, caractérisé en ce que les moyens de coupure (2) sont intégrés au dispositif de distribution (4).

## Patentansprüche

1. Stromverteiler für eine Verteilertafel mit in Reihe geschalteten Polen (21), geeignet zum automatischen Gesamtpol-Unterbrechen der angeschlossenen elektrischen Schaltungen, dadurch gekennzeichnet, daß Mittel vorgesehen sind, die ein automatisches Betätigen des gesamtpoligen Unterbrechens unter dem Einfluß eines elektrischen Signales erlauben, und die einerseits eine bewegliche Stange (23, 41) umfassen, die mit beweglichen Kontakten (32, 45) versehen ist, womit es möglich ist, die Verteilervorrichtung (1, 4) an Verteilerschienen (3) anzuschließen, wobei die bewegliche Stange (23, 41) mit Unterbrechungsmitteln (2) fest verbunden ist, die eine Schraubenfeder (27, 51) aufweisen, die einerseits am Gehäuse und andererseits am Ende der beweglichen Stange (23,41) befestigt sind, und daß eine Polplatte (28) vorgesehen ist, die mit demselben Ende der beweglichen Stange (23, 41) fest verbunden und einem Elektromagneten (29; 52) zugeordnet ist, ferner ein Hebel (25, 48), der an einem der Enden der beweglichen Stange (23, 41) befestigt ist.

2. Vorrichtung nach Anspruch 1, dadurch gekennzeichnet, daß die Unterbrechungsmittel (2) von der Verteilervorrichtung verschieden sind.

3. Vorrichtung nach einem der Ansprüche 1 oder 2, dadurch gekennzeichnet, daß die Unterbrechungsmittel (2) in die Verteilervorrichtung (4) integriert sind.

## Claims

1. Current distribution device for electrical power distribution panel comprising poles (21) arranged in linear fashion, able to cut off in an omnipolar manner and automatically the electrical circuits crossing it, characterised in that it comprises means permitting automatic control of its omnipolar cut-off under the effect of an electrical signal, the said means comprising first of all a movable bar (23, 41) fitted with movable contacts (32, 45) permitting the distribution device (1, 4) to be linked to the distribution bars (3), the said movable bar (23, 41) being integral with the cut-off means (2) comprising a helicoidal spring (27, 51) fixed first of all to the casing (20) and secondly to the end of the movable bar (23, 41), a polar plate (28) integral with the same end of the said movable bar (23, 41), associated with an electromagnet (29, 52) and a lever (25, 48) integral with one of the ends of the said movable bar (23, 41).

2. Device according to claim 1, characterised in that the cut-off means (2) are separate from the distribution device (1).

3. Device according to one of claims 1 or 2, characterised in that the cut-off means (2) are integral with the distribution device (4).
